# EUROPEAN PATENT APPLICATION

(11) **EP 4 645 164 A1**
(43) Date of publication of application: **05.11.2025**
(21) Application number: 24173044.9
(22) Date of filing: 29.04.2024
(51) Int. Cl.: G06N 3/045

(54) **METHODS AND SYSTEMS FOR DATA ACQUISITION AND DATA-INSIGHT FOR THE DEVELOPMENT OF AUTOMATED DRIVING SYSTEMS**

(71) Applicant: Zenseact AB, 417 56 Göteborg (SE)
(72) Inventor: GYLLENHAMMAR, Magnus, 435 43 Pixbo (SE); HESS, Georg, 412 79 Göteborg (SE); TONDERSKI, Adam, 426 53 Västra Frölunda (SE)
(74) Representative: Zacco Sweden AB

(57) **Abstract**

The present disclosure relates, among other things, to computer-implemented method (100) comprising: obtaining (5102) a sequence of sensor data comprising sensor data captured by one or more sensors of a vehicle for a plurality of time instances; generating (S104) a set of sensor data embeddings for the sequence of sensor data, wherein each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space; obtaining (S106) two or more query embeddings, the two or more query embeddings having been generated by processing a query through one or more query embedding networks trained to process queries and to output corresponding one or more query embeddings for each query in the multi-dimensional space, and wherein each of the one or more query embedding networks has been trained in association with at least one of the one or more sensor data embedding networks so as to relate to the same multi-dimensional space; obtaining (S108) a logical statement associated with the query for which the two or more query embeddings have been generated; and in response to each of the two or more query embeddings matching a respective sensor data embedding of the set of sensor data embeddings, and the sensor data, corresponding to said matching sensor data embeddings, fulfilling the logical statement, performing (5110) an action of a set of defined actions.

## Description

### TECHNICAL FIELD

The herein disclosed technology relates to the field of autonomous driving. In particular, but not exclusively, the herein disclosed technology relates to methods and systems for data acquisition and data-insight for the development of automated driving systems.

### BACKGROUND

Development of automated driving systems (ADS) suffers from the long tail problem. This means that while most driving happens under some nominal conditions, there is a large number of scenarios that occur rarely, but are just as important to handle, if not more, as those under nominal conditions, to achieve a performant ADS. These scenarios are not only valuable for training of models used by the ADS, but also for identifying reasons behind, or better understanding the occurrence of such scenarios, which can be utilized in the further development of the ADS.

Neural networks have been responsible for significant advances in recent years due to their flexibility and ability to generalize given enough adequate training data. However, in order for autonomous systems based on neural networks to work well, and be safe to deploy on the streets, there is need for a significant amount of training examples that correspond to this long tail. It is not enough to train on millions of hours of driving data, since the limited capacity of real-time neural networks will overfit to the nominal cases. Instead, one needs to build a balanced dataset where rare and difficult cases are significantly overrepresented, compared to their frequency in the real world. Furthermore, also when evaluating and ensuring safety of the whole system the same challenge applies. It is usually only a very small subset of events and sequences that really tell us something about the performance of the system.

One solution for this would be to use human annotations for finding these rare cases, or handcrafted triggers for tagging scenes. However, both these solutions require a large amount of costly human labor, either by annotators for labelling or by engineers for designing, testing and verifying triggers for each and every case. There is therefore a need for new and improved solutions in this field.

### SUMMARY

The herein disclosed technology seeks to mitigate, alleviate or eliminate one or more of the above-identified deficiencies and disadvantages in the prior art to address various problems relating to data acquisition and data-insight for the development of automated driving systems (ADS). In this regard, the inventors propose a query system that can provide scenes and events as well as sequences thereof based e.g. on natural language prompts. This gives the developers an intuitive interface to the data collection and field evaluation of the system and features under development. Moreover, it provides for better ways of capturing the dynamic aspect of many scenarios.

Various aspects and embodiments of the disclosed technology are defined below and in the accompanying independent and dependent claims.

According to a first aspect of the disclosed technology, there is provided a computer-implemented method. The method comprises obtaining a sequence of sensor data comprising sensor data captured by one or more sensors of a vehicle for a plurality of time instances. The method further comprises generating a set of sensor data embeddings for the sequence of sensor data. Each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space. The method further comprises obtaining two or more query embeddings. The two or more query embeddings having been generated by processing a query through one or more query embedding networks trained to process queries and to output corresponding one or more query embeddings for each query in the multi-dimensional space. Each of the one or more query embedding networks has been trained in association with at least one of the one or more sensor data embedding networks so as to relate to the same multi-dimensional space. The method further comprises obtaining a logical statement associated with the query for which the two or more query embeddings have been generated. The method further comprises, in response to each of the two or more query embeddings matching a respective sensor data embedding of the set of sensor data embeddings, and the sensor data, corresponding to said matching sensor data embeddings, fulfilling the logical statement, performing an action of a set of defined actions.

According to a second aspect of the disclosed technology, there is provided a computer program product comprising instructions which, when the program is executed by a computing device, causes the computing device to carry out the method according to any one of the embodiments of the first aspect disclosed herein. With this aspect of the disclosed technology, similar advantages and preferred features are present as in the other aspects.

According to a third aspect of the disclosed technology, there is provided a (non-transitory) computer-readable storage medium comprising instructions which, when executed by a computing device, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect of the disclosed technology, there is provided a computing device. The computing device comprises control circuitry configured to obtain a sequence of sensor data comprising sensor data captured by one or more sensors of a vehicle for a plurality of time instances. The control circuitry is further configured to generate a set of sensor data embeddings for the sequence of sensor data. Each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space. The control circuitry is further configured to obtain two or more query embeddings. The two or more query embeddings having been generated by processing a query through one or more query embedding networks trained to process queries and to output corresponding one or more query embeddings for each query in the multi-dimensional space. Each of the one or more query embedding networks has been trained in association with at least one of the one or more sensor data embedding networks so as to relate to the same multi-dimensional space. The control circuitry is further configured to obtain a logical statement associated with the query for which the two or more query embeddings have been generated. The control circuitry is further configured to, in response to each of the two or more query embeddings matching a respective sensor data embedding of the set of sensor data embeddings, and the sensor data, corresponding to said matching sensor data embeddings, fulfilling the logical statement, perform an action of a set of defined actions. With this aspect of the disclosed technology, similar advantages and preferred features are present as in the other aspects.

According to a fifth aspect, there is provided a vehicle. The vehicle comprises one or more sensors. The vehicle further comprises the computing device according to any one of the embodiments of the fourth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it provides for an improved way of representing dynamic scenarios, unfolding over a sequence of time.

An advantage of some embodiments is enabling data mining of development crucial events, or scenarios, using natural language.

An advantage of some embodiments is that it allows for an intuitive way of providing probability estimates of events and scenarios using a fleet of vehicles.

An advantage of some embodiments is that it can effectively support development of the next version features by reducing manual effort to interface with fleet insight.

An advantage of some embodiments is that collection of data from ADS equipped vehicles is rendered more efficient and cost effective, e.g. in terms of being more targeted due to better representations of the desired data (e.g. a certain sequence of events), as well as utilizing sensor modularity, meaning the desired data can be identified across different sensors, as well as across time.

An advantage of some embodiments is that insight into the fleet of ADS equipped vehicles is enabled with efficient utilization of processing, memory and transmission resources. Insight may in this case e.g. refer to insight into the performance of the fleet (or more specifically the ADS), insight into the inner workings of the ADS, insight into scenarios experienced by the fleet (e.g. what scenarios, or to what extent), insight into how these scenarios are dealt with, etc.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method in accordance with some embodiments.
Figure 2 illustrates, by way of example, how a sequence of sensor data can be matched with a query.
Figure 3 illustrates, by way of example, a computing device in accordance with some embodiments.
Figure 4 is a schematic illustration of a vehicle in accordance with some embodiments.
Figure 5 is a schematic illustration of a system in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

### Overview

An imperative aspect of achieving reliable Automated Driving System (ADS) functionality for the vehicles of tomorrow is to obtain a comprehensive understanding of the scenarios occurring in the surrounding environment of the vehicle, as well as understanding how the vehicle (or its ADS) tackles the scenario. These scenarios (or "driving scenarios") is to be construed as a sequence of events or circumstances that the vehicle may encounter while navigating on the road. This includes various factors such as traffic patterns, road conditions, weather conditions, pedestrian behavior, and interactions with other vehicles or objects.

Each scenario can present unique challenges that the autonomous driving system must be capable of recognizing and appropriately responding to in order to ensure safe and efficient operation. Development and testing of autonomous driving systems typically involve exposing the system to a wide range of scenarios to validate its performance under diverse conditions and to improve its ability to handle real-world situations effectively.

However, due to the unpredictable and dynamic nature of these scenarios, there exist nearly endless varieties and complexities of scenarios. In other words, there is a need for immense amounts of data (sensor data logged by vehicles) for achieving reliable autonomous functionality, but also the "right" kind of data, meaning the data most relevant for the development. A relevant scenario (or "scenario of interest") can thus be a scenario relevant for the further development of the ADS (e.g. rare scenario, safety critical scenarios, scenarios in which the ADS performance is below what is desired, etc.), or otherwise relevant for collecting information of. Simply insight into how often a certain scenario occurs, or other statistics, can also provide valuable information for the development.

However, some of the challenges with trying to acquire this data from a fleet of vehicles for the purpose of testing, developing, and verifying ADS functions is that finding the relevant sequences of sensor data among the vast amounts of data collected by such vehicles can be like finding the needle in a haystack. The problem can basically be described as wanting to find a dataset of needles, sampled from the infinite haystack of driving scenarios.

To this end, the herein disclosed technology proposes a solution for identifying specific dynamic scenarios, which is enabled through a prompt (or query) which can be decomposed into a logic statement. This can allow for identification of scenarios that plays out over a sequence of time. The inventors have realized that to fully represent a scenario (e.g. for the purpose of identification, collection, or evaluation), you have to consider sequences of sensor data. Moreover, it is suggested to associate the query with a logical statement, for capturing the dynamic aspects of the scenario.

The disclosed technology is at least partly based upon the use of embeddings which is a technique for expressing information as vectors, in a multidimensional space (sometimes referred to as data space, vector space or latent space), and to identify relevant data based on a similarity between embeddings. In short, it is herein proposed to utilize embedding networks (artificial neural networks trained to generate an embedding in the data space representative of its input) on the vehicle's sensor data (sensor output), integrate these networks directly in the sensor stream, and compare with the query embedded in the same multidimensional space.

In use, a user can create a query (e.g., text, image, and/or video query) that is processed by one or more query embedding networks that outputs a corresponding query embeddings that can be downloaded to one or more vehicles. The vehicles on the other hand, can generate sensor data embeddings by processing a sequence output from one or more sensors through one or more corresponding sensor data embedding networks. The generated sensor data embeddings can then be compared against the downloaded query embedding(s) in the common multidimensional space in order to identify matching or otherwise relevant (e.g., embeddings exceeding a similarity score threshold) sensor data embeddings. The identified sensor data embeddings are all linked to the specific sensor data sequence that resulted in those embeddings whereupon this sensor data sequence can be stored in a data repository of a vehicle for subsequent transmission to the "cloud" or to be downloaded during e.g., a workshop visit. As mentioned in the foregoing, the vehicles may comprise multiple embedding networks for generating embeddings for the output of other data sources. Thereby providing a solution for querying vehicles, using free-text, images, and/or videos, in real-time for collection of specific data samples.

On top of this, is it proposed to include the dynamic aspect of the scenario or scene, by including the logical statement associated with the query. The logical statement may for instance define the temporal aspect of a considered sequence of sensor data. The logical statement therefore provides additional value to the querying of sensor data sequences, by allowing the user to request more specific scenarios, or for providing more detailed insight of the ADS development, as the dynamic nature of driving scenarios now can be described. Further aspects of the disclosed technology will become apparent from the detailed description below.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that the distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "sensor" or "sensor device" refers to a specialized component or system that is designed to capture and gather information from the vehicle's surroundings. It may further refer to components for gathering information of the vehicle itself. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, Ultrasonic sensors, inertial measurement unit (IMU), GPS, wheel speed sensors etc. LiDAR sensors use laser beams to measure distances and create high-resolution 3D maps of the vehicle's surroundings. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The wording "network", as in "embedding network", (may also be referred to as machine-learning algorithm, machine learning model, (artificial) neural network, deep learning network and so forth) herein refers to any computational system or algorithm that is trained on data to make predictions, decisions or otherwise generate an output, e.g. by learning patterns and relationships from training data and applying that knowledge on new input data.

Neural networks, or artificial neural networks, emulate computing systems inspired by biological neural networks found in the brains of living creatures. These systems exhibit learning capabilities, progressively enhancing their performance without requiring task-specific programming. For instance, in image recognition, a neural network can be trained to detect specific objects within images by analyzing labelled example images. Once it grasps the correlation between objects and their names, it can apply this knowledge to identify similar objects in unlabeled images.

Neural networks typically comprise a plurality of layers of neurons, and each neuron may represent a mathematical operation which is applied to the input data. Typically, the machine learning model comprises an input layer, one or more hidden layers, and an output layer. The first layer may be referred to as the input layer. The output of each layer (except the output layer) in the network may be fed to a subsequent layer, which in turn produces a new output. The new output may be fed to a further subsequent layer. The output of the network may be an output of the output layer. The process may be repeated for all layers in the network. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the network. Different activation functions can be used, such as continuous activation function (e.g. sigmoid), or partially continuous activation functions (e.g. ReLU). During the training process, weights and/or biases associated with the neurons of the layers may be adjusted until the network may produce predictions for the input training data that reflect a ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art

Moreover, during the training of a neural network, regression-comprised of statistical processes for understanding variable relationships-can involve minimizing a cost function. This function gauges the network's performance in accurately linking training examples to their intended outputs. The technique called backpropagation can then be employed. Backpropagation, a widely used method for training artificial neural networks, collaborates with optimization methods like stochastic gradient descent (SGD).

Moreover, use of backpropagation can include propagation and weight update. Backpropagation involves two key steps: propagation and weight adjustment. When an input enters the neural network, it moves forward through each layer until it reaches the output layer. Here, the neural network's output is measured against the desired output using a cost function, generating an error value for each output node. These errors then flow backward, starting from the output layer, assigning error values to each node based on its contribution to the final output. These error values are pivotal-they aid in computing the cost function's gradient concerning the neural network's weights. This gradient guides the selected optimization technique, adjusting the weights to minimize the cost function.

More specifically, the term embedding network (may also be referred to as "encoding network", "embedding neural network", or "embedding artificial neural network") refers to a computational model or set of techniques that are used to enable a computer to generate an embedding for input data (e.g. sensor data, text data, etc.), where an "embedding" may be understood as a mathematical representation of said input data. In more detail, the "embedding network" is used to transform high-dimensional data into a lower-dimensional space (multi-dimensional (vector) space) while preserving meaningful relationships between the input data points.

Embedding networks are for example used for tasks like natural language processing (NLP) and computer vision. These networks take raw input data, such as words in a sentence or pixels in an image, and convert them into fixed-size, numerical vectors (embeddings) that capture essential characteristics or features of the input data. In more detail, in NLP, the embedding networks convert words into numerical vectors, where words with similar meanings or contextual usage are represented closer to each other in the embedding space (or multi-dimensional space). Similarly, in computer vision, the embedding networks convert images to numerical vectors, enabling the network to understand visual similarities, like grouping similar objects or scenes closer together in the embedding space.

The embedding network itself may comprise layers of neural network architecture, often employing techniques like convolutional layers, recurrent layers, fully connected layers, attention layers, or transformer layers to learn and extract meaningful patterns from the input data. The encoding networks may be trained through processes like supervised learning, unsupervised learning, or self-supervised learning to optimize the embeddings for specific downstream tasks, such as classification, clustering, or recommendation.

In some embodiments, the various embedding networks are trained to generate embeddings in the same embedding space (the same multi-dimensional space or the same multi-dimensional vector space) so that embeddings (generated by different embedding networks) that are contextually, spatially and/or temporally related point towards the same point within the multi-dimensional space. The term "point towards the same point within the multi-dimensional space" should in the present context be interpreted broadly, and encompass "point in substantially the same direction within the multi-dimensional space" or "point towards substantially the same point within the multi-dimensional space" and so forth. In more detail, having two embedding vectors pointing towards the same point or in the same direction, one can infer a relationship between the two underlying data samples. For example, if one has two embedding vectors, one can calculate how close they are to pointing towards the same point or how close they are to pointing in the same direction in order to determine a relationship between the underlying data samples, where the closer they are to pointing towards the same point or the same direction, the more likely it is that the underlying data samples relate to the same object or scene.

This may for example be done by training a first embedding network, to generate embeddings in a multi-dimensional space, based on input data from a first data source. Then, each of the other embedding networks are trained "against" or in association with the first embedding network (or any of the other embedding networks one trained) so that the embeddings of the other networks that are contextually, spatially and/or temporally related with the embeddings of the first embedding network point towards the same point within the multi-dimensional space as the related embeddings of the first embedding network. For example, if the first embedding network can be trained to generate image embeddings for camera images and a second embedding network is intended to generate embeddings for LiDAR data, then the second embedding network may be trained by feeding the second embedding network with lidar data of a scene where corresponding image embeddings (of that scene) will be used as basis for forming a ground-truth (desired output). By doing this process for each subsequent embedding network, one may obtain a set of embedding networks capable of ingesting outputs from various data sources and output corresponding embeddings where contextual, spatial and/or temporal relations are represented by the proximity or similarly in direction of the embeddings (vectors) in the multi-dimensional space.

As used herein, the term "in response to" may be construed to mean "when or "upon" or "if" depending on the context. Similarly, the phrase "in response to [determining at least one of the one or more scenario triggers] being fulfilled" may be construed to mean "when it is determined that at least one scenario trigger is fulfilled" or "in an instance of fulfilment of at least one scenario trigger" "upon determining a fulfilment of at least one scenario trigger" or "upon detecting and identifying occurrence of an event fulfilling at least one scenario trigger" or "in response to detecting occurrence of an event fulfilling at least one scenario trigger", depending on the context.

As used herein, the wording "one or more of" a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

### Embodiments

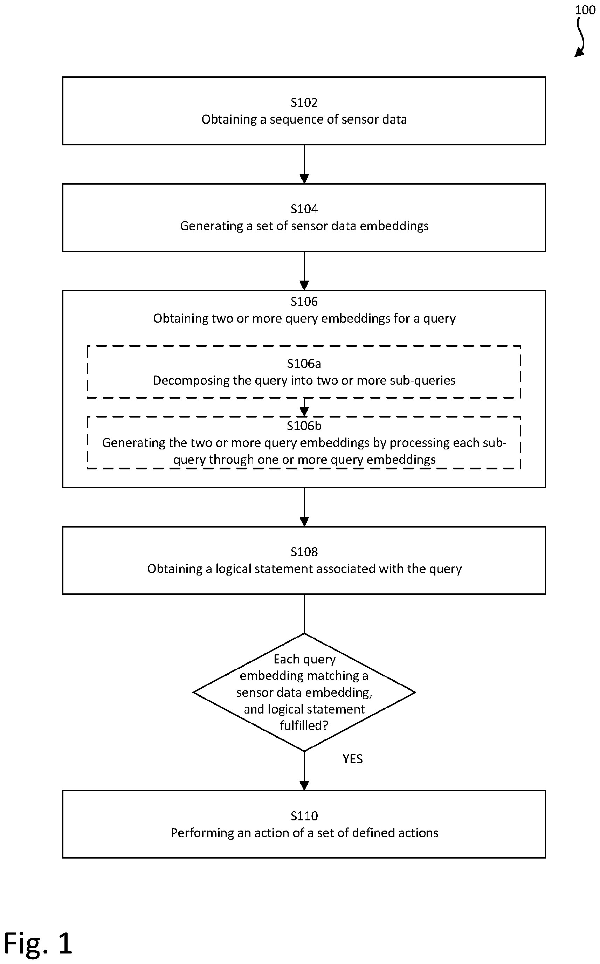

Figure 1 illustrates a schematic flowchart representation of a method 100 in accordance with some embodiments. More specifically, the method 100 may be a method for data acquisition, data mining, data-insight, or for dynamic triggering for event recordings, for development of an ADS. Put differently, the method 100 may be a method for providing a dynamic stream of scenario recordings, and/or continuous monitoring of these scenarios.

The method 100 is preferably a computer-implemented method. The method 100 may e.g. be performed by a processing system of a vehicle. The processing system may for example comprise one or more processors and one or more memories coupled to the one or more processors, wherein the one or more memories store one or more programs that perform the steps, services and functions of the method 100 disclosed herein when executed by the one or more processors. It is however to be appreciated that the steps of the method may be distributed over two or more processing systems, such as between a vehicle and a server (may also be referred to as remote server, cloud server, central server, back-office server, fleet server, or back-end server), which will be further elaborated upon herein. Additionally, the method 100 may find applicability also in an offline environment, e.g. performed by a server. In such case, the method 100 may be used for identifying, and/or retrieving relevant sequence of sensor data from a database of stored sensor data sequences. However, in the following, the method 100 will be described as performed by a vehicle, by way of example.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S102, S106 and S108 may all be performed independently of each other, concurrently, in any order or at any point in time, based on a specific realization. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein described embodiments are only given as examples and should not be limiting to the present invention. Other solutions, uses, objectives, and functions within the scope of the invention as claimed below described patent claims should be apparent for the person skilled in the art. It should be appreciated that the steps which are comprised in dashed lines in Fig. 1 are examples of a number of optional steps which may form part of a number of alternative embodiments. The optional steps need not be performed in order. Furthermore, it should be appreciated that not all of the optional steps need to be performed.

The method 100 comprises obtaining S102 a sequence of sensor data. The sequence of sensor data comprises sensor data captured by one or more sensors of a vehicle for a plurality of time instances. Said vehicle may also be the vehicle performing the steps of the method 100.

The wording "sequence" as in "sensor data sequence", or "sequence of sensor data" shall herein be seen as indicating a temporal aspect, in this case of the sensor data. As mentioned above, the sequence of sensor data is captured over a plurality of time instances. Put differently, the sequence of sensor data may be understood as sensor data captured over a certain time sequence (or time period). The sequence of sensor data may e.g. comprise sensor data recorded over a time period of 10 seconds, 20 seconds, or 30 seconds, or any other suitable length depending on a specific realization. The sequence of sensor data may then comprise a plurality of sensor data frames, each sensor data frame being associated with a time instance of the plurality of time instances. The time instances may correspond to a sampling interval of the sensor.

Moreover, as stated above, the sensor data sequence comprises sensor data from one or more sensor of the vehicle. In other words, the sensor data sequence may comprise sensor data from several different sensors. The sensor data may comprise various types of information captured by one or more sensors of the vehicle (i.e. different sensor data types), such as camera images, lidar output, radar output, GPS coordinates, accelerometer readings, and other sensor-generated data. A sensor data type may also encompass sensor data from different instances of the same sensor type. For example, one sensor data type may be image data from a first camera having a first field of view, while a second sensor data type may be image data from a second camera having a second field of view.

In the case of one sensor (and thus sensor data of one sensor data type), the obtained sensor data sequence may comprise sensor data of said sensor over the entire time period (i.e. for each of the plurality of time instances). For example, the sequence of sensor data may comprise images captured by a camera over a 10 second time period. The same may hold in the case of two or more sensors. I.e. the sensor data sequence may comprise sensor data of a first sensor over the entire time period, sensor data of a second sensor over the entire time period, etc. For example, the sequence of sensor data may comprise images captured by a camera over a 10 second time period, and point-cloud data captured by a LiDAR sensor over the same time period. In some embodiments, the sensor data of the different sensors may be captured for different time instances of the plurality of time instances. For example, the sensor data sequence may comprise sensor data of a first sensor for a first subset of the of the plurality of time instances (i.e. a first portion of the time period), and sensor data of a second sensor for a second subset of the plurality of time instances. The first and second subset of time instances may be the same time instances, different time instances, or partly overlapping time instances. For example, the sequence of sensor data may comprise images captured by a camera over a 5 second time period, and point-cloud data captured by a LiDAR sensor over a 10 second time period. The 5 second time period and the 10 second time period may be non-overlapping time periods, thus making up a sensor data sequence of 15 seconds in total. In another example, the 10 second time period overlaps the 5 second time period, thus making up a sensor data sequence of 10 seconds in total. In yet another example, the 5 second time period and the 10 second time period partly overlap each other, thus making up a sensor data sequence of between 10 and 15 seconds. Is it to be noted that the above examples are in no way limiting the scope of the disclosed technology, but merely servers to give an illustrative example for improved understanding.

The sensor data, as referred to above, may pertain to a surrounding environment of the vehicle. In other words, the sensor data may depict, or in any other way describe, any aspect(s) of the surrounding environment of the vehicle. The surrounding environment of a vehicle is herein to be understood as a general area around the vehicle in which objects (such as other vehicles, landmarks, obstacles, etc.) can be detected and identified by vehicle sensors (RADAR, LiDAR, cameras, etc.), i.e. within a sensor range of the vehicle. Thus, the sensor data may give information about the position of other vehicles, pedestrians, obstacles, road conditions, and more. It may further give information about the direction of the lane or road in which the vehicle is travelling. It is to be appreciated that the principles of the present technology can also be applied to sensor data depicting an interior of the vehicle. E.g. as part of a driver monitoring system.

The sensor data depicting the surrounding environment may comprise unprocessed sensor data (e.g. raw sensor data). In such case, the sensor data sequence may comprise sensor data obtained directly from the one or more sensors of the vehicle. The sensor data may e.g. be image data, LiDAR data, radar data, and/or ultrasonic data. Alternatively, or in combination, the sensor data depicting the surrounding environment may comprise processed sensor data. The processed sensor data may for instance encompass sensor data that has been processed by any onboard system of the vehicle, such as a perception module or system configured to perceive the surrounding environment depicted in the sensor data. The sensor data may thus be perception output data. The perception output data may thus be any information to help the ADS make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The perception output data may be "obtained" from the perception module or perception system in the sense that it is "derived" from the perception model and/or "based on output data" from a perception module or system. The perception module/system may be configured to generate the perception output data by being adapted and/or configured to "estimate the surroundings of said vehicle", "estimate at least a portion of surroundings of said vehicle", "determine surroundings of said vehicle", "interpret sensory information relevant for the autonomous maneuvering of said vehicle", and/or "estimate surroundings of said vehicle and make model predictions of future states of the surroundings of said vehicle". In conclusion, the perception output data may be any information pertaining to what objects have been detected in the surrounding environment, and/or how these relate to the ego-vehicle (i.e. the vehicle having collected the sensor data).

The sensor data may further comprise associated meta data. The meta data may e.g. comprise timestamps, location information, vehicle information, log duration, etc.

Alternatively, or in combination, the sensor data sequence may comprise sensor data pertaining to one or more internal sensor measurements of the vehicle. Said sensor data may e.g. obtained by means of internal sensor measurements within the vehicle, or system outputs of the vehicle. Internal sensor data of the vehicle may for instance be data from an Inertial Measurement Unit (IMU), such as information about the vehicle's acceleration in jaw, pitch, and roll. Further examples include wheel speed sensor data (such as information about a rotational speed of each wheel, or any indication of slipping, sliding, or wheel lock-up), steering angle data, brake pressure data, throttle position data, etc. The sensor data indicative of the internal states may e.g. be data obtained from a CAN-bus of the vehicle.

In some embodiments, obtaining S102 the sequence of sensor data comprises collecting the sensor data from a received sensor data stream that is output from the one or more sensors of the vehicle. In another example, the sensor data is retrieved from a storage or data buffer in which the sensor data is stored. The data buffer may be of a suitable size or length depending on specific realizations. In more detail, the sensor data buffer may be of any size deemed suitable, e.g. in consideration of data capacity restraints and/or characteristics of the sensor data samples, and may for instance range from under a second up to several minutes, or more preferred, from a few seconds up to less than a minute. For example, the data buffer may be configured to store 5 to 20 seconds of the sensor data stream (that is sampled with a set sample rate such as e.g., 10 Hz, 20 Hz, 30 Hz, 40 Hz, etc.), in a First-In First-Out (FIFO) arrangement. However, in some embodiments the data buffer may be configured to store between 30 seconds and 60 seconds of the sensor data stream. This may provide the advantage of being able to capture an entire scenario's development over time.

In general, the term "obtaining" as used herein, is to be interpreted broadly and encompasses receiving, retrieving, collecting, acquiring, and so forth directly and/or indirectly between two entities or components configured to be in communication with each other or further with other external entities. However, in some embodiments, the term "obtaining" is to be construed as determining, deriving, forming, computing, etc.

In some embodiments, the method 100 further comprises obtaining data pertaining to one or more internal states (or internal operating conditions) of the vehicle. The internal states of the vehicle may encompass an Autonomous Emergency Braking (AEB) intervention, time-to-collision exceeding a threshold value, detecting a critical maneuver (either by the driver or by the ADS), loss of grip, driver parameters (e.g. from a driver monitoring system) etc. The internal states of the vehicle may further comprise diagnostics of internal systems and sensors of the vehicle, such as detecting an overexposure of a camera.

In some embodiments, the method 100 further comprises obtaining data pertaining to one or more external states (or operating conditions) of the vehicle. The external states may e.g. encompass weather forecasts, map data, communication from other vehicles or infrastructure (i.e. V2X or V2V communication) indicating e.g. a traffic jam, etc.

The method 100 further comprises generating S104 a set of sensor data embeddings for the sequence of sensor data. As previously described, an embedding is a representation of the original data in a multi-dimensional space. Sensor data embeddings are thus to be seen as embeddings generated for sensor data. How the sensor data embeddings can be generated will be further explained below.

The set of sensor data embeddings comprises two or more sensor data embeddings generated based on the sensor data sequence. As mentioned above, the sensor data sequence may comprise sensor data of different sensor data types. The two or more sensor data embeddings may thus be generated for different sensor data types of the sensor data sequence (further explained below). Alternatively, or in combination, the two or more sensor data embeddings may be generated for different subsequences of the sensor data sequence.

More specifically, each sensor data embedding of the set of sensor data embeddings is generated by processing sensor data for one or more time instances of the plurality of time instances, through one or more sensor data embedding networks. The one or more sensor data embedding networks having been trained to process sensor data and to output corresponding sensor data embeddings for the sensor data in a multi-dimensional space.

Each sensor data embedding may thus be generated for sensor data of one time instance (e.g. one sensor data frame), or of two or more time instances (i.e. a subset of time instances of the plurality of time instances). The wording "sensor data for one or more time instances of the plurality of time instances" may be understood as a subset of the sensor data sequence.

It is to be appreciated that the timeframe of the sensor data sequence herein refers to a timeframe (i.e. length of time) over which a scenario may unfold, or a sequence of events occur. In contrast, the timeframe for sensor data of which a sensor data embedding is generated, generally refers to shorter time periods. The timeframe for the plurality of time instances for which the sensor data sequence is obtained, may for instance be one or more orders of magnitude larger than the timeframe associated with the sensor data for which a sensor data embedding is generated. For example, the sensor data sequence may be in the order of 10, 20, or 30 seconds. Whereas a sensor data embedding may be generated for sensor data of a single frame, or of 1 or 2 seconds. It is however to be noted that this may depend on a specific realization, and shall not be seen as limiting to the scope of the present disclosure.

In some embodiments, each sensor data embedding of the set sensor data embeddings corresponds to a respective sensor data type of one or more sensor data types. Thus, the set of sensor data embeddings may be representative of sensor data of equally many sensor data types. As a non-limiting example, the set of sensor data embeddings may comprise a first sensor data embedding generated for image data captured by a camera, and a second sensor data embedding generated for lidar data captured by a LiDAR sensor. It is to be appreciated that any number of sensor data embeddings may be obtained, as well as for any combination of sensor data types. Put differently, by processing sensor data (comprising sensor data of one or more sensor data types) for one or more time instances through one or more sensor data embeddings, one sensor data embedding may be generated for each type of sensor data processed by the one or more sensor data embeddings.

The one or more sensor data embedding networks may comprise a plurality of sensor data embedding networks including one sensor data embedding network for a corresponding sensor data type. Put differently, each sensor data embedding network of the plurality of sensor data embedding networks may represent a respective/corresponding sensor data type of the one or more sensor data types. In other words, in some embodiments, the sensor data represented by the one or more sensor data embeddings comprise sensor data output by two or more different sensors of the vehicle, and accordingly two or more corresponding sensor data embedding networks in a one-to-one ratio (i.e., each sensor data embedding network is related to one specific sensor (e.g. first camera, second camera, lidar sensor, radar, etc.) of the vehicle).

Moreover, the plurality of sensor data embedding networks may comprises a first sensor data embedding network trained to process sensor data of a first sensor data type and to output a corresponding sensor data embedding, and a second sensor data embedding network trained to process sensor data of a second sensor data type and to output a corresponding sensor data embedding. The first and second sensor data types may be different sensor data types, or different instances of the same sensor data type. The first sensor data embedding network being trained in association with the second sensor data embedding network such that a sensor embedding generated by the first sensor data embedding network and a sensor embedding generated by the second sensor data embedding network point towards the same point within the multi-dimensional space when the respective sensor data for which the two sensor data embeddings are generated, are contextually, spatially and/or temporally related. In other words, the relationship between sensor data of two different types, or from different time instances, are reflected in the similarity between the sensor data embeddings generated for said sensor data.

In some embodiments, each of the other sensor data embedding networks (i.e., the second sensor data embedding network for a second sensor data type (or a second sensor), a third sensor data embedding network for a third sensor data type (or a third sensor), etc.) can be trained in association with the first sensor data embedding network such that a sensor data embedding generated by the first sensor data embedding network and a sensor data embedding generated by each of the other sensor data embedding networks point towards the same point within the multi-dimensional space when the two-sensor data embeddings are contextually, spatially and/or temporally related.

Thus, in some embodiments, each sensor data embedding network may be configured to generate sensor data embeddings for sensor data of a respective sensor data type. It is to be appreciated that the plurality of sensor data embedding networks may comprise any number of sensor data embedding networks, depending on a specific implementation. Thus, the plurality of sensor data embedding networks may further comprise a third sensor data embedding network, a fourth sensor data embedding network, etc. The plurality of sensor data embedding networks may all be trained together, in association with each other. Alternatively, the second sensor data embedding network, the third sensor data embedding network, and the fourth sensor data embedding network (and so on), may all be trained in association with the first sensor data embedding network. In another example, the second sensor data embedding network may be trained in association with the first sensor data embedding network, as stated above. The third sensor data embedding network may in turn be trained in association with the second sensor data embedding network. And the fourth sensor data embedding network may be trained in association with the third sensor data embedding network, and so forth.

Alternatively, or in combination, the one or more sensor data embedding networks may comprise a fused sensor data embedding network trained to process fused sensor data. The fused sensor data may comprise a fusion of at least two sensor data types. Put differently, the fused sensor data may comprise at least two sensor data types of the one or more sensor data types. The fused encoding network may be trained to process at least two sensor data types, and output a sensor data embedding for each of the at least two sensor data types. The fused sensor data may comprise the at least two sensor data types individually, or processed to form a fused or combined sensor data type. In the latter case, a sensor data embedding representative of the combined sensor data type may be output, rather than one for each sensor data type respectively.

The method 100 further comprises obtaining S106 two or more query embeddings. The two or more query embeddings are to be understood representations of a query in a multi-dimensional space, similar to how the sensor data embeddings are representations of sensor data. The two or more query embeddings may be received from another entity at which they have been generated. Alternatively, the two or more query embeddings may be generated by the vehicle (or whatever entity is performing the method 100). The obtained two or more query embeddings are generated by processing the query through one or more query embedding networks trained to process queries and to output corresponding one or more query embeddings for each query in the multi-dimensional space. Each of the one or more query embedding networks being trained in association with at least one of the one or more sensor data embedding networks so as to relate to the same multi-dimensional space. Put differently, the one or more query embedding networks may be trained such that a query embedding of a query that is contextually related to specific sensor data points towards the same point as the sensor data embedding of that sensor data within the multi-dimensional vector space.

The query is herein to be understood as a prompt or input descriptive of a desired (or requested) scenario (or more specifically a sensor data sequence depicting the desired scenario). The query may e.g. be a user defined text, image, and/or video query. The query may be any combination of the above query types. Moreover, the query may be a dynamic query, i.e. describing a dynamic scenario with a temporal aspect. In some embodiments, the query for which the two or more query embeddings are generated is descriptive of a certain sequence of events. As an example, the query may be "Children playing, while a truck cuts in from the left, rendering an Autonomous Emergency Braking event". In this example, the query can be decomposed into a number of sub-queries. In other words, the query may comprise a plurality of sub-queries. The sub-queries, in combination with a logical statement (further explained below) associated with the query, can together be used for representing the query above, i.e. be descriptive of a certain sequence of events. For example, the original query, "Children playing, while a truck cuts in from the left, rendering an Autonomous Emergency Braking event", can be decomposed into four sub-queries (or blocks), namely A: "Children playing", B: "Truck in left lane", C: "Truck in front", and D: "Autonomous Emergency Braking event". Together with the logical statement, "(A while B, then C) and D", this can represent the original query above. The subqueries can be understood as building blocks which together make up the query. The logical statement then describes how the building blocks should be put together in order to form the query.

The two or more query embeddings may correspond to a respective sub-query of the query. Stated differently, the two or more query embeddings may be query embeddings for subqueries (i.e. subquery embeddings). Thus, in the example above, a first query embedding may be obtained for the subquery A, a second query embedding for the subquery B, and a third query embedding for the subquery C. The subquery D is herein representing an example of data pertaining to an internal state of the vehicle. The data pertaining to an internal state of the vehicle may be embedded into the multidimensional space, as with the sensor data sequence. Alternatively, the data pertaining to the internal states of the vehicle may be implemented directly, e.g. as a Boolean expression or trigger, without the need for further processing. The same holds for any obtained information pertaining to an external state of the vehicle.

In some embodiments, multiple query embeddings networks may be provided, e.g., one for every input type such as e.g., free-text input, image input or video input. However, in some embodiments a single, larger, query embedding network may be employed capable of handling queries of different input formats, where the different types of queries may be ingested separately or in combined fashion. The query may be processed through the one or more query embedding networks as a whole, or as two or more sub-queries as mentioned above. In the latter case, the two or more sub-queries may be processed through the same, or different query embedding networks.

Some embodiments herein propose an architecture where one sensor data embedding network serves as a basis for training the query embedding network(s). In more detail, once a sensor data embedding network has been trained to generate sensor data embeddings, one can train a query embedding network against the sensor data embedding network so that the generated query embeddings that are associated with a particular sensor data sample points towards the same point as the corresponding sensor data embedding of that particular sensor data sample in the multi-dimensional space. This can for example be done by creating training examples with training pairs of queries and corresponding sensor data as known in the art of machine learning. For example, a training pair could be the query "stop signs" and then sensor data (e.g., camera images) of stop signs are retrieved and their corresponding embeddings are used to form a ground truth for the query embedding network. Thereby one attains a connection between queries and sensor data, and searching for specific sensor data sequences with e.g., free text queries is enabled.

In some embodiments, obtaining S106 the two or more query embeddings comprises decomposing S106a the query into two or more sub-queries, and generating S106b the two or more query embeddings by processing each sub-query through the one or more query embedding networks. The steps of decomposing S106a the query into two or more sub-queries, and generating S106b the two or more query embeddings may be performed by the server described above. Obtaining S106 the two or more query embeddings may thus comprise receiving the two or more query embeddings from the server, having performed the decomposition of the query, and generation of the query embeddings. In some embodiments, the step of decomposing S106a the query into two or more sub-queries may be performed by the server, which then transmits the two or more sub-queries to the vehicle. The vehicle may then generate S106b the two or more query embeddings. In some embodiments, the vehicle receives the query, and performs the steps denoted S106a and S106b locally, within the vehicle.

Decomposing S106a the query into two or more sub-queries may comprise processing the query through a machine learning model trained to process queries, and output corresponding subqueries. The machine learning model may for instance be a transformer-based network, such as BERT or GPT, configured to extract the semantic meaning and logics of natural language. Alternatively, the two or more sub-queries may be received from a user. In other words, the query may be input as a plurality of subqueries.

For the subqueries to be representative of the query, also the logical statement is needed. Thus, the method 100 further comprises obtaining S108 a logical statement associated with the query for which the two or more query embeddings have been generated. As explained in the foregoing, the logical statement may be descriptive of a sequence of events, together with the two or more subqueries. More specifically, the logical statement should herein be construed as something describing the logical relationships (or the dynamical aspect) of a scenario or sequence of events which the vehicle may experience. In other words, the logical statement can capture e.g. temporal, spatial, or other logical relations of a considered sequence. The considered sequence can either be the sensor data sequence depicting the scenario, or as described in the query).

The logical statement may be obtained S108 as a separate input from the set of sensor data embeddings. The logical statement may in turn be generated either as a manual input form the user, or extracted from the query automatically. For example, the step of decomposing S106a the query into two or more sub-queries may further generate the logical statement. Put differently, the logical statement may be generated as part of decomposing S106a the query.

The logical statement may define one or more logical conditions pertaining to said query (or to the subqueries thereof). More specifically, the logical conditions may describe how the sub-queries of the query relate to each other, e.g. in a temporal aspect, for them to be representative of the query.

The one or more logical conditions may comprise one or more time-dependent conditions. Time-dependent conditions may e.g. be related to in what order different things (e.g. events or actions of objects in the environment) occur in the scenario. I.e. how things occur in relation to each other. In logical operators, time-dependent conditions may e.g. be formulated as "while", "after", "before", "then", "next", "in parallel", etc.

The one or more logical conditions may comprise one or more time-independent conditions. Time-independent conditions may e.g. describe what things are, or are not, to occur as part of the sequence of events, regardless of when or in what order they occur. In logical operators, time-independent conditions may e.g. be formulated as "and", "or", "not", "if", etc.

The method 100 further comprises, in response to each of the two or more query embeddings matching a respective sensor data embedding of the set of sensor data embeddings, and the sensor data, corresponding to said matching sensor data embeddings, fulfilling the logical statement, performing S110 an action of a set of defined actions.

Accordingly, performing S110 the action can be done in response to finding matches for the query embeddings, among the set of sensor data embeddings, which also fulfills the logical statement.

Identifying matches between query embeddings and sensor data embeddings may comprise comparing the obtained query embeddings with sensor data embeddings of the set of sensor data embeddings within the multi-dimensional space in view of a distance metric in order to identify relevant sensor data. In other words, matching of a query embedding and a sensor data embedding may be based on a proximity within the multi-dimensional space. More specifically, a sensor data embedding can match a query embedding if said sensor data embedding is within a distance value from said query embedding within the multi-dimensional space.

The distance value (or distance threshold) may be predefined. In some embodiments the distance value (distance threshold) is dynamically set. For example, the distance value may be dynamically set by the user query directly or indirectly (e.g., metadata associated with the user query). In more detail, the query may include some operators or commands that define distance value (threshold) such as e.g., "small" (or "narrow"), "medium", "large" ("or "broad"). Alternatively, the operators or commands may be set in metadata of the query (e.g., having interactable "boxes" in the User Interface, Ul) through which the query is generated. The matching algorithm may then account for the operators or commands when searching for matching sensor data embeddings. Moreover, the term "within a distance value" may be construed as "fulfilling a distance metric", where the distance metric may be that the embeddings that are selected are the embeddings that are within a Euclidian/Manhattan/Cosine distance value (e.g., distance threshold) from the query embeddings.

It is to be noted that two query embeddings need not to match with different sensor data embeddings. Instead, one sensor data embedding could potentially match with several query embeddings. The opposite may also apply, i.e. one query embedding "matching" with several sensor data embeddings.

However, in addition to the query embeddings finding a respective match among the set of sensor data embeddings, also the logical statement is to be fulfilled. As stated above, the fulfilment of the logical statement is based on the sensor data corresponding to the matching sensor data embeddings, or rather on an event depicted in said sensor data, which matches a subquery. More specifically, the fulfilment may be evaluated based on data pertaining to its occurrence, such as a time of occurrence (in relation to other events), a length of time of occurrence, or simply the fact that it has occurred within a certain time period. The fulfilment of the logical statement may be determined based on meta data associated with the sensor data.

The defined action to be performed S110 may be selected based on an intended purpose for the development of the ADS. The set of defined actions may comprise one or more of the following actions, denoted (i) to (vi). It is however to be noted that the defined action is not limited to those.

The action may be (i) storing the sensor data represented by the sensor data embeddings matching the two or more query embeddings. Storing, as described herein may be understood as storing locally, and/or temporarily. The sensor data, in this case, may be stored for further processing at a later point in time. Storing may thus serve as an intermediate action, before another action is performed.

The action may be (ii) transmitting sensor data represented by the sensor data embeddings matching the two or more query embeddings. The sensor data may be transmitted e.g. to the server for further processing. The sensor data may e.g. be annotated and used in training of a machine learning model being part of the ADS.

The action may be (iii) transmitting the sensor data embeddings matching the two or more query embeddings. The sensor data embeddings may be transmitted to the server. Transmitting the sensor data embeddings may serve as a data efficient way of representing the sensor data. The sensor data embeddings may then be further processed at the server.

The action may be (iv) incrementing a log of event occurrences. The log of event occurrences may correspond to a log of occurrences of the sequence of events (or scenario) described by the query. Thereby, information about a probability of occurrence of the sequence of events described by the query can be obtained. This may provide valuable insight for the continued development of the ADS.

The above described method 100 may be performed at runtime, as the vehicle navigate the roads, for the purpose of continuously searching for matches to the query. More specifically, the query may be distributed to the vehicle, e.g. in the form of two or more query embeddings, and an associated logical statement, in accordance with above. Sensor data sequences may be continuously obtained as the vehicle drives. From these, the sensor data embeddings may be continuously generated, and temporarily stored in a data buffer. The sensor data embeddings may e.g. be generated for sensor data for one or more time instances at a regular interval. In other words, sensor data embeddings may be generated with some interval. In another example, a pre-indicator, or trigger, may be used as indication of a potentially relevant sequence of sensor data, or potentially relevant sensor data for specific time instances. The pre-indicator may thus be used either as a trigger for collection of a specific sequence of sensor data, or for what specific subset of the sequence to generate sensor data embeddings for. As pre-indicator, the subquery (or corresponding query embedding) that comes first in the logical statement (i.e. in a temporal sense), can be used. Thus, upon a match for the first query embedding is found, additional sensor data embeddings may be generated for sensor data associated with the subsequent time instances.

The sensor data embeddings stored in the buffer can be compared to the two or more query embeddings, and the fulfilment of the logical statement can be monitored. Once sensor data embeddings matching the query embeddings, and fulfilling the logical statement, are found, the corresponding sensor data (or any other relevant data) may be stored, and potentially later transmitted to the server.

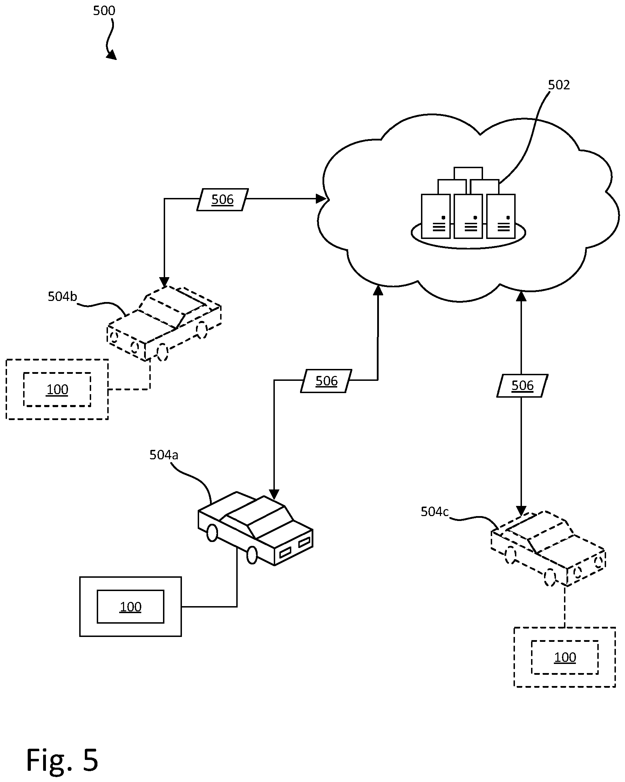

As readily realized by the skilled person looking at the present disclosure, the proposed technology can be implemented in a distributed manner over two of more entities. As an example, the method 100 may be implemented by a system comprising a vehicle, and a server, such as the system 500 described below in connection with Fig. 5. This will be further elaborated upon below.

Executable instructions for performing these functions are, optionally, included in a non-transitory computer-readable storage medium or other computer program product configured for execution by one or more processors.

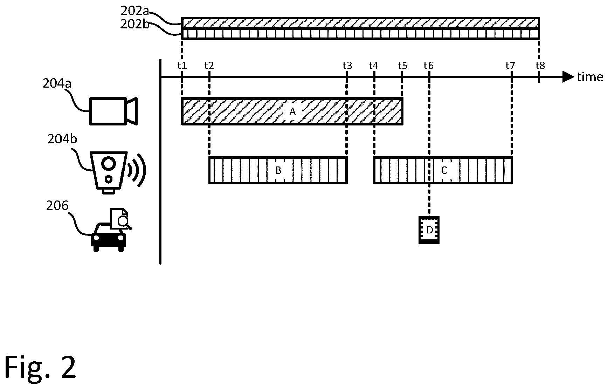

Figure 2 illustrates, by way of example, how a sequence of sensor data can be matched with a query. More specifically, it is shown how the previous example query, "Children playing, while a truck cuts in from the left, rendering an Autonomous Emergency Braking event", can be identified within the sensor data sequence.

The illustrated example shows a sensor data sequence spanning over a plurality of time instances, namely from t1 to t8. Moreover, the sensor data sequence comprises image data 202a, captured by a camera 204a, and LiDAR data 202b, captured by a LiDAR sensor 204b. In addition, internal states 206 of the vehicle are monitored.

As described above, the query can be decomposed into four blocks, A to D, namely A: "Children playing", B: "Truck in left lane", C: "Truck in front", and D: "Autonomous Emergency Braking event". Together with the logical statement, "(A while B, then C) and D", this can represent the original query above. The subqueries can be understood as building blocks which together make up the query. The logical statement then describes how the building blocks should be put together in order to form the query. In some embodiments, the query may further define which sensor data type a subquery is to be compared/matched with. Thus, a sub-query may be associated with a specific sensor, or sensor data type. In some embodiments, a sub-query may be compared to several different sensor data types, to identify potential matches. The sub-query may thus be independent of sensor, or sensor data type.

A match for block A can for instance be found as a subset of the image data, herein between t1 and t5. Moreover, a match for block B can be found as a first subset of the LiDAR data, herein between t2 and t3. Furthermore, a match for block C can be found as a second subset of the LiDAR data, herein between t4 and t7. Lastly, a match for block D can be found simply by reading directly a signal outputted from the AEB system of the vehicle.

Once matches for each block has been found, it can be determined whether the logical statement is fulfilled. Looking for instance on when the different subsets of sensor data occur, it can be concluded that the match of block B occurs during the same time as the match of block A. And that the match of block C occurs at a point in time after the occurrence of B. Moreover, an AEB event is detected at time instance t6, which is within the sequence between t1 and t8.

It can thereby be concluded that the sensor data sequence fulfills the query. Hence, the sensor data sequence may depict a scenario or sequence of events of interest, and therefore be relevant for the further development of the ADS.

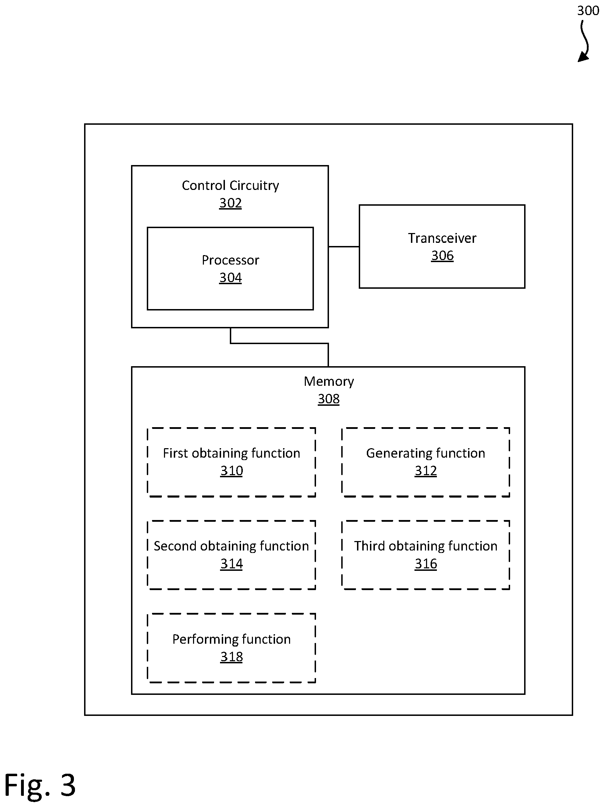

Figure 3 is a schematic illustration of a computing device 300 in accordance with some embodiments. The computing device 300 as described herein refers to any computer system, processing system or general computing device. Even though the computing device 300 is herein illustrated as one device, the computing device 300 may be a distributed computing system, formed by a number of different computational devices.

The computing device 300 comprises control circuitry 302. The control circuitry 302 may physically comprise one single circuitry device. Alternatively, the control circuitry 302 may be distributed over several circuitry devices.

As shown in the example of Fig. 3, the computing device 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the computing device 300. The control circuitry 302 may include a processor 304, such as a central processing unit (CPU), microcontroller, or microprocessor. The processor 304 may be configured to execute program code stored in the memory 308, in order to carry out functions and operations of the computing device 300. The control circuitry 302 is configured to perform the steps of the method 100 as described above in connection with Fig. 1. The steps of the method 100 may be implemented in one or more functions stored in the memory 308.

The transceiver 306 is configured to enable the computing device 300 to communicate with other entities, such as vehicles or servers. The transceiver 306 may both transmit data from and receive data to the computing device 300.

The memory 308 may be a non-transitory computer-readable storage medium. The memory 308 may be one or more of a buffer, a flash memory, a hard drive, a removable media, a volatile memory, a non-volatile memory, a random-access memory (RAM), or another suitable device. In a typical arrangement, the memory 308 may include a non-volatile memory for long-term data storage and a volatile memory that functions as system memory for the computing device 300. The memory 308 may exchange data with the circuitry 302 over the data bus. Accompanying control lines and an address bus between the memory 308 and the circuitry 302 also may be present.

Functions and operations of the computing device 300 may be implemented in the form of executable logic routines (e.g., lines of code, software programs, etc.) that are stored on a non-transitory computer readable recording medium (e.g., the memory 308) of the computing device 300 and are executed by the circuitry 302 (e.g., using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 300 is described.

The control circuitry 302 is configured to obtain a sequence of sensor data comprising sensor data captured by one or more sensors of a vehicle for a plurality of time instances. This may e.g. be performed by execution of a first obtaining function 310.

The control circuitry 302 is further configured to generate a set of sensor data embeddings for the sequence of sensor data. Each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space. Generating the set of sensor data embeddings may e.g. be performed by execution of a generating function 312.

The control circuitry 302 is further configured to obtain two or more query embeddings. The two or more query embeddings having been generated by processing a query through one or more query embedding networks trained to process queries and to output corresponding one or more query embeddings for each query in the multi-dimensional space. Each of the one or more query embedding networks has been trained in association with at least one of the one or more sensor data embedding networks so as to relate to the same multi-dimensional space. Obtaining the two or more query embeddings may e.g. be performed by execution of a second obtaining function 314.

The control circuitry 302 is further configured to obtain a logical statement associated with the query for which the two or more query embeddings have been generated. This may e.g. be performed by execution of a third obtaining function 316.

The control circuitry 302 is further configured to, in response to each of the two or more query embeddings matching a respective sensor data embedding of the set of sensor data embeddings, and the sensor data, corresponding to said matching sensor data embeddings, fulfilling the logical statement, perform an action of a set of defined actions. This may e.g. be performed by execution of a performing function 318.

It should be noted that the principles, features, aspects, and advantages of the method 100 as described above in connection with Fig. 1, are applicable also to the computing device 300 as described herein. In order to avoid undue repetition, reference is made to the above.

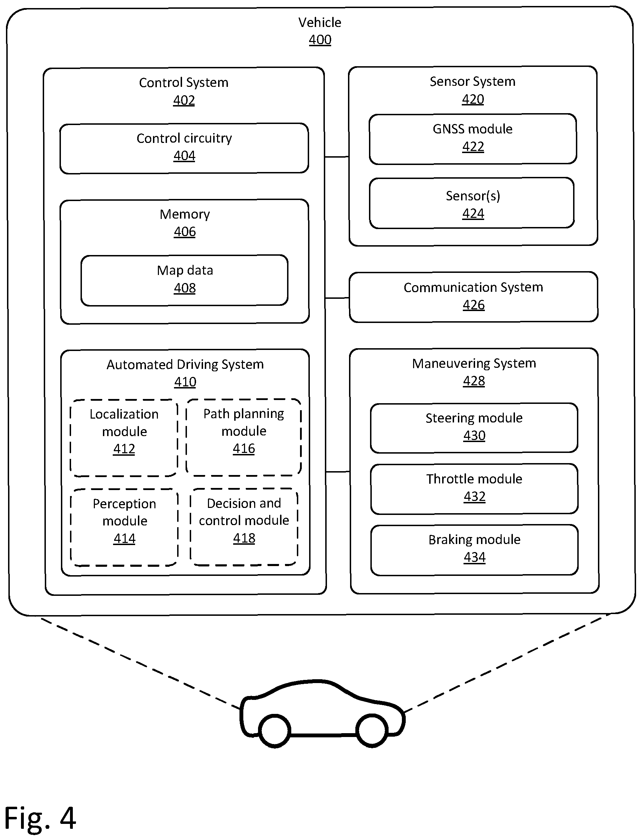

Figure 4 is a schematic illustration of a vehicle 400 in accordance with some embodiments. The vehicle 400 is equipped with an Automated Driving System (ADS) 410. As used herein, a "vehicle" is any form of motorized transport. For example, the vehicle 400 may be any road vehicle such as a car (as illustrated herein), a motorcycle, a (cargo) truck, a bus, a smart bicycle, etc.

The herein disclosed vehicle 400 is configured to perform the method 100 as described above in connection with Fig. 1. This may e.g. be performed by control circuitry 404 of the vehicle (further described below). Seen differently, the vehicle 400 may comprise the computing device 300 as described above in connection with Fig. 3. The computing device 300 may be integrated in the vehicle, e.g. as part of the control system 402 of the vehicle. The computing device 300 may share its control circuitry 302 with the control circuitry 404 of the vehicle 400.

The vehicle 400 comprises a number of elements which can be commonly found in autonomous or semi-autonomous vehicles. It will be understood that the vehicle 400 can have any combination of the various elements shown in Fig. 4. Moreover, the vehicle 400 may comprise further elements than those shown in Fig. 4. While the various elements are herein shown as located inside the vehicle 400, one or more of the elements can be located externally to the vehicle 400. Further, even though the various elements are herein depicted in a certain arrangement, the various elements may also be implemented in different arrangements, as readily understood by the skilled person. It should be further noted that the various elements may be communicatively connected to each other in any suitable way. The vehicle 400 of Fig. 4 should be seen merely as an illustrative example, as the elements of the vehicle 400 can be realized in several different ways.

The vehicle 400 comprises a control system 402. The control system 402 is configured to carry out overall control of functions and operations of the vehicle 400. The control system 402 comprises control circuitry 404 and a memory 406. The control circuitry 402 may physically comprise one single circuitry device. Alternatively, the control circuitry 402 may be distributed over several circuitry devices. As an example, the control system 402 may share its control circuitry 404 with other parts of the vehicle. The control circuitry 402 may comprise one or more processors, such as a central processing unit (CPU), microcontroller, or microprocessor. The one or more processors may be configured to execute program code stored in the memory 406, in order to carry out functions and operations of the vehicle 400. The processor(s) may be or include any number of hardware components for conducting data or signal processing or for executing computer code stored in the memory 406. In some embodiments, the control circuitry 404, or some functions thereof, may be implemented on one or more so-called system-on-a-chips (SoC). As an example, the ADS 410 may be implemented on a SoC. The memory 406 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 406 may include database components, object code components, script components, or any other type of information structure for supporting the various activities of the present description.

In the illustrated example, the memory 406 further stores map data 408. The map data 408 may for instance be used by the ADS 410 of the vehicle 400 in order to perform autonomous functions of the vehicle 400. The map data 408 may comprise high-definition (HD) map data. It is contemplated that the memory 408, even though illustrated as a separate element from the ADS 410, may be provided as an integral element of the ADS 410. In other words, according to some embodiments, any distributed or local memory device may be utilized in the realization of the present inventive concept. Similarly, the control circuitry 404 may be distributed e.g. such that one or more processors of the control circuitry 404 is provided as integral elements of the ADS 410 or any other system of the vehicle 400. In other words, according to an exemplary embodiment, any distributed or local control circuitry device may be utilized in the realization of the present inventive concept.

The vehicle 400 further comprises a sensor system 420. The sensor system 420 is configured to acquire sensory data about the vehicle itself, or of its surroundings. The sensor system 420 may for example comprise a Global Navigation Satellite System (GNSS) module 422 (such as a GPS) configured to collect geographical position data of the vehicle 400. The sensor system 420 may further comprise one or more sensors 424. The one or more sensor(s) 424 may be any type of on-board sensors, such as cameras, LIDARs and RADARs, ultrasonic sensors, gyroscopes, accelerometers, odometers etc. It should be appreciated that the sensor system 420 may also provide the possibility to acquire sensory data directly or via dedicated sensor control circuitry in the vehicle 400.

The vehicle 400 further comprises a communication system 426. The communication system 426 is configured to communicate with external units, such as other vehicles (i.e. via vehicle-to-vehicle (V2V) communication protocols), remote servers (e.g. cloud servers, as shown below in connection with Fig. 5), databases or other external devices, i.e. vehicle-to-infrastructure (V2I) or vehicle-to-everything (V2X) communication protocols. The communication system 426 may communicate using one or more communication technologies. The communication system 426 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 400 or with local infrastructure elements. ETSI is working on cellular standards for vehicle communication and for instance 5G is considered as a suitable solution due to the low latency and efficient handling of high bandwidths and communication channels.

The communication system 426 may further provide the possibility to send output to a remote location (e.g. remote operator or control center) by means of the one or more antennas. Moreover, the communication system 426 may be further configured to allow the various elements of the vehicle 400 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 400 further comprises a maneuvering system 420. The maneuvering system 428 is configured to control the maneuvering of the vehicle 400. The maneuvering system 428 comprises a steering module 430 configured to control the heading of the vehicle 400. The maneuvering system 428 further comprises a throttle module 432 configured to control actuation of the throttle of the vehicle 400. The maneuvering system 428 further comprises a braking module 434 configured to control actuation of the brakes of the vehicle 400. The various modules of the steering system 428 may receive manual input from a driver of the vehicle 400 (i.e. from a steering wheel, a gas pedal and a brake pedal respectively). However, the maneuvering system 428 may be communicatively connected to the ADS 410 of the vehicle, to receive instructions on how the various modules should act. Thus, the ADS 410 can control the maneuvering of the vehicle 400.

As stated above, the vehicle 400 comprises an ADS 410. The ADS 410 may be part of the control system 402 of the vehicle. The ADS 410 is configured to carry out the functions and operations of the autonomous functions of the vehicle 400. The ADS 410 can comprise a number of modules, where each module is tasked with different functions of the ADS 410.

The ADS 410 may comprise a localization module 412 or localization block/system. The localization module 412 is configured to determine and/or monitor a geographical position and heading of the vehicle 400, and may utilize data from the sensor system 420, such as data from the GNSS module 422. Alternatively, or in combination, the localization module 412 may utilize data from the one or more sensors 424. The localization system may alternatively be realized as a Real Time Kinematics (RTK) GPS in order to improve accuracy.

The ADS 410 may further comprise a perception module 414 or perception block/system. The perception module 414 may refer to any commonly known module and/or functionality, e.g. comprised in one or more electronic control modules and/or nodes of the vehicle 400, adapted and/or configured to interpret sensory data - relevant for driving of the vehicle 400 - to identify e.g. obstacles, vehicle lanes, relevant signage, appropriate navigation paths etc. The perception module 414 may thus be adapted to rely on and obtain inputs from multiple data sources, such as automotive imaging, image processing, computer vision, and/or in-car networking, etc., in combination with sensory data e.g. from the sensor system 420.

An object detection model for detecting and/or classifying object in the surrounding environment of the vehicle 400 (or other types of machine learning models) may be part of the ADS 410, or more specifically part of the perception module 414. Such models may be a local copy of a global model managed by a remote (of fleet) server, i.e. as part of a federated learning scheme.

The localization module 412 and/or the perception module 414 may be communicatively connected to the sensor system 420 in order to receive sensor data from the sensor system 420. The localization module 412 and/or the perception module 414 may further transmit control instructions to the sensor system 420.

The ADS may further comprise a path planning module 416. The path planning module 416 is configured to determine a planned path of the vehicle 400 based on a perception and location of the vehicle as determined by the perception module 414 and the localization module 412 respectively. A planned path determined by the path planning module 416 may be sent to the maneuvering system 428 for execution.

The ADS may further comprise a decision and control module 418. The decision and control module 418 is configured to perform the control and make decisions of the ADS 410. For example, the decision and control module 418 may decide on whether the planned path determined by the path-planning module 416 should be executed or not.

It should be understood that parts of the described solution may be implemented either in the vehicle 400, in a server located external to the vehicle, or in a combination of internal and external to the vehicle; for instance, in a server in communication with the vehicle, a so-called cloud solution, as explained below, e.g. in connection with Fig. 5. The different features and steps of the embodiments may be combined in other combinations than those described. Further, the elements of the vehicle 400 (i.e. the systems and modules) may be implemented in different combinations than those described herein.

Figure 5 illustrates, by way of example, a system 500 according to some embodiments. More specifically, a system 500 being configured to implement the principles of the presently disclosed technology. The system 500 should therefore be seen as a non-limiting example of a realization of the herein disclosed aspects of the present technology. For instance, the system 500 may be configured to perform the method 100 described in connection with Fig. 1. Thus, any features or principles described above in connection with Fig. 1 are applicable also to the system 500 as described herein, and vice versa.

The system 500 comprises a server 502 (or remote, cloud, central, back-office, fleet, or back-end server), referred to in the following as the remote server 502 or just server 502. As illustrated, the server 502 may be provided in the cloud, i.e. as a cloud-implemented server. Advantageously, the server 502 may perform more computational heavy tasks, or manage and coordinate the fleet of vehicles (further described below), such as aggregating data from, or distributing data to, the different vehicles of the fleet, updating ADS functions and distributing the updates to the fleet, etc.

The system 500 further comprises one or more vehicles 504a-c, also referred to as a fleet of vehicles 504a-c. The one or more vehicles 504a-c may be vehicles 400 as described above in connection with Fig. 4. The one or more vehicles 504a-c may be configured to perform the method 100 described above in connection with Fig. 1. Thus, any principles and aspects described above in connection with Fig. 1 apply also to the vehicles 504a-c of the fleet of vehicles. The fleet illustrated in Fig. 5 comprises three vehicles, a first, second and third vehicle 504a-c, by way of example. The system 500 may however comprise any number of vehicles 504a-c. In the following, reference will mainly be made to the first vehicle 504a, however the same aspects apply also to the other vehicles of the fleet of vehicles.

The one or more vehicles 504a-c are communicatively connected to the remote server 502. This may provide for transmitting and/or receiving data 506 between the vehicles and the server. The one or more vehicles 504a-c may be further communicatively connected to each other. The data 506 may be any kind of data, such as communication signals, sensor data, sensor data embeddings, queries, query embeddings, etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area Network (WLAN) (e.g. IEEE 802.11) based solutions. The sever 502 comprises a suitable memory and control circuitry, for example, one or more processors or processing circuitry, as well as one or more other components such as a data interface and transceiver. The server 502 may also include software modules or other components, such that the control circuity can be configured to execute machine-readable instructions loaded from memory to implement the steps of the method to be performed.

As shown herein, the vehicles of the fleet of vehicles 504a-d are configured to perform the method 100 as described above in connection with Fig. 1. In some embodiments, the server 502 may be configured to perform some parts of the method 100. In particular, the server 502 may be configured to generate the two or more query embeddings in accordance with what has been described above, and transmit these to the vehicle 504a. Furthermore, the server 502 may transmit the two or more query embeddings to several vehicles of the fleet of vehicles 504a-c, thereby enabling data acquisition and insight from the fleet of vehicles. The server 502 may then receive e.g. sequences of sensor data, or sensor data embeddings, matching the query, and in response to an action of the set of defined actions being performed in a vehicle of the fleet of vehicles.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

It should be noted that any reference signs do not limit the scope of the claims, that the invention may be at least in part implemented by means of both hardware and software, and that the same item of hardware may represent several "means" or "units".

## Claims

1. A computer-implemented method (100) comprising:
obtaining (S102) a sequence of sensor data comprising sensor data captured by one or more sensors of a vehicle for a plurality of time instances;
generating (S104) a set of sensor data embeddings for the sequence of sensor data, wherein each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space;
obtaining (S106) two or more query embeddings, the two or more query embeddings having been generated by processing a query through one or more query embedding networks trained to process queries and to output corresponding one or more query embeddings for each query in the multi-dimensional space, and wherein each of the one or more query embedding networks has been trained in association with at least one of the one or more sensor data embedding networks so as to relate to the same multi-dimensional space;
obtaining (S108) a logical statement associated with the query for which the two or more query embeddings have been generated; and
in response to each of the two or more query embeddings matching a respective sensor data embedding of the set of sensor data embeddings, and the sensor data, corresponding to said matching sensor data embeddings, fulfilling the logical statement, performing (S110) an action of a set of defined actions.

2. The method (100) according to claim 1, wherein matching a query embedding and a sensor data embedding is based on a proximity within the multi-dimensional space.

3. The method (100) according to claim 1 or 2, wherein a sensor data embedding matches a query embedding if said sensor data embedding is within a distance value from said query embedding within the multi-dimensional space.

4. The method (100) according to any one of the claims 1 to 3, wherein the set of defined actions may comprise one or more of (i) storing the sensor data represented by the sensor data embeddings matching the two or more query embeddings, (ii) transmitting sensor data represented by the sensor data embeddings matching the two or more query embeddings, (iii) transmitting the sensor data embeddings matching the two or more query embeddings, and (iv) incrementing a log of event occurrences.

5. The method (100) according to any one of the claims 1 to 4, wherein the logical statement defines one or more logical conditions pertaining to said query.

6. The method (100) according to claim 5, wherein the one or more conditions comprises one or more time-dependent conditions and/or one or more time-independent conditions.

7. The method (100) according to any one of the claims 1 to 6, wherein the query for which the two or more query embeddings are generated is descriptive of a certain sequence of events.

8. The method (100) according to any one of the claims 1 to 7, wherein obtaining (S106) the two or more query embeddings comprises:
decomposing (S106a) the query into two or more sub-queries, and
generating (S106b) the two or more query embeddings by processing each sub-query through the one or more query embedding networks.

9. The method (100) according to any one of the claims 1 to 8, wherein the query comprises a plurality of sub-queries, wherein the plurality of sub-queries, in combination with the logical statement, are descriptive of a certain sequence of events.

10. The method (100) according to any one of the claims 1 to 9, wherein the sequence of sensor data comprises data of one or more sensor data types.

11. The method (100) according to claim 10, wherein the one or more sensor data embedding networks comprise a plurality of sensor data embedding networks including one sensor data embedding network for a corresponding sensor data type,
wherein the plurality of sensor data embedding networks comprises a first sensor data embedding network trained to process sensor data of a first sensor data type and to output a corresponding sensor data embedding, and a second sensor data embedding network trained to process sensor data of a second sensor data type and to output a corresponding sensor data embedding, and
wherein the first sensor data embedding network has been trained in association with the second sensor data embedding network such that a sensor embedding generated by the first sensor data embedding network and a sensor embedding generated by the second sensor data embedding network point towards the same point within the multi-dimensional space when the respective sensor data for which the two sensor data embeddings are generated, are contextually, spatially and/or temporally related.

12. The method (100) according to claim 10 or 11, wherein the one or more sensor data embedding networks comprise a fused sensor data embedding network trained to process fused sensor data, wherein the fused sensor data comprises a fusion of sensor data of at least two sensor data types.

13. A computer program product comprising instructions which, when the program is executed by a computer, causes the computer to carry out the method (100) according to any one of claims 1 to 12.

14. A computing device (400) comprising control circuitry (202) configured to:
obtain a sequence of sensor data comprising sensor data captured by one or more sensors of a vehicle for a plurality of time instances;
generate a set of sensor data embeddings for the sequence of sensor data, wherein each sensor data embedding of the set of sensor data embeddings is generated by processing sensor data for one or more time instances of the plurality of time instances, through one or more sensor data embedding networks having been trained to process sensor data and to output corresponding sensor data embeddings for the sensor data in a multi-dimensional space;
obtain two or more query embeddings, the two or more query embeddings having been generated by processing a query through one or more query embedding networks trained to process queries and to output corresponding one or more query embeddings for each query in the multi-dimensional space, and wherein each of the one or more query embedding networks has been trained in association with at least one of the one or more sensor data embedding networks so as to relate to the same multi-dimensional space;
obtain a logical statement associated with the query for which the two or more query embeddings have been generated; and
in response to each of the two or more query embeddings matching a respective sensor data embedding of the set of sensor data embeddings, and the sensor data, corresponding to said matching sensor data embeddings, fulfilling the logical statement, perform an action of a set of defined actions.

15. A vehicle (500) comprising:
one or more sensors (524), and
the computing device (400) according to claim 14.
